# EUROPEAN PATENT SPECIFICATION

(11) **EP 2 921 380 B1**
(45) Date of publication and mention of the grant of the patent: **28.09.2016**
(21) Application number: 15158554.4
(22) Date of filing: 11.03.2015
(51) Int. Cl.: B62J 1/12, B60N 2/00, B62J 27/00, B62J 99/00

(54) **RIDING DETECTING DEVICE FOR SADDLE RIDING TYPE VEHICLE**
FAHRERERKENNUNGSVORRICHTUNG FÜR EIN SATTELFAHRZEUG
DISPOSITIF DE DÉTECTION DE CONDUCTEUR POUR VÉHICULE DE TYPE À SELLE

(30) Priority: 19.03.2014 JP 2014056526
(43) Date of publication of application: 23.09.2015
(73) Proprietor: HONDA MOTOR CO., LTD., Tokyo, 107-8556 (JP)
(72) Inventor: Makabe, Tomoya, Saitama, 351-0193 (JP)
(74) Representative: Brevalex

(56) References cited:
- DE-A1- 10 223 366
- JP-A- 2012 176 720
- US-A1- 2007 137 916

## Description

### [Technical Field]

The present invention relates to a riding detecting device for a saddle riding type vehicle which device detects that an occupant is seated on a seat.

### [Background Art]

A riding detecting device in a saddle riding type vehicle such as a motorcycle is known which has a load sensor installed within a seat, and which detects by the load sensor that an occupant is seated on the seat (see Patent Document 1 and the like).

The riding detecting device described in Patent Document 1 has a plurality of pressure sensitive type load sensors installed in an internal portion on the undersurface side of the seat. Each of the load sensors is disposed between cushioning of the seat and a bottom plate member that supports the cushioning, and an internal switch of the load sensor is turned on when an occupant is seated on the seat. A controller mounted in the vehicle detects the riding of the occupant on the basis of an on signal input from the load sensor.

### [Prior Art Document]

### [Patent Document]

[Patent Document 1]
Japanese Patent Laid-Open No. 2012-176720

### [Summary of the Invention]

### [Problem to be Solved by the Invention]

However, in the riding detecting device described in Patent Document 1, the load sensor is disposed between the cushioning of the seat and the bottom plate member. There is thus a fear of the internal structure of the seat side becoming complex and the weight of the seat being increased, the seat needing to be lifted upward at a time of maintenance or the like.

It is accordingly an object of the present invention to provide a riding detecting device for a saddle riding type vehicle which device makes it possible to achieve simplification and weight reduction of an internal structure of a seat.

### [Means for Solving the Problem]

In order to solve the above problem, according to the present invention, there is provided a riding detecting device for a saddle riding type vehicle, the riding detecting device including: a seat 9 on which an occupant is seated; a pair of left and right seat rails 13L, 13R disposed below the seat 9 to support a load of the seat 9; and a load sensor 25 detecting the load acting on the seat 9, wherein the seat 9 includes cushioning 19 receiving the load of the occupant and a bottom plate member 20 supporting the cushioning 19, at least one cushion rubber 27a, 27b, 27c is disposed between the bottom plate member 20 and the seat rails 13L, 13R, the load sensor 25 is attached to the seat rail 13L on one side, and one 27a of the cushion rubbers is disposed so as to be capable of abutting against a position of the seat rail 13R on another side, the position of the seat rail 13R being bilaterally symmetric to the load sensor 25.

Thus, the load sensor 25 is attached to the seat rail 13L on one side, and the one cushion rubber 27a is disposed on the seat rail 13R on the other side so as to be bilaterally symmetric to the load sensor 25. Therefore, when an occupant is seated on the seat 9, the load of the occupant is distributed and supported by the load sensor 25 and the cushion rubber 27a. The load of the occupant seated on the seat 9 is detected by the load sensor 25 at this time. Because the load sensor 25 is attached to the side of the seat rail 13L, the internal structure of the side of the seat 9 is simplified, and also the weight of the seat 9 is reduced.

A thickness T₂ in an upward-downward direction of the load sensor 25 may be set larger than a thickness T₁ in the upward-downward direction of the cushion rubber 27a, and a recessed portion 42 that is recessed upward, abuts against the load sensor 25, and transmits the load to the load sensor 25 may be provided at a position of the bottom plate member 20, the position of the bottom plate member 20 being opposed to the load sensor 25.

In this case, even when the thickness T₂ in the upward-downward direction of the load sensor 25 is set larger than the thickness T₁ in the upward-downward direction of the cushion rubber 27a, the part of the load sensor 25 which part projects further upward than the cushion rubber 27a can be received by the recessed portion 42 of the bottom plate member 20, and the load of the occupant which load acts on the seat 9 can be transmitted to the load sensor 25 via the recessed portion 42. Hence, even when the thickness T₂ in the upward-downward direction of the load sensor 25 is set larger than the thickness T₁ in the upward-downward direction of the cushion rubber 27a, the above constitution eliminates a need for unnecessarily increasing thickness in the upward-downward direction of the seat 9 as a whole.

In addition, preferably, the load sensor 25 is provided with a load receiving portion 34 formed by an elastic member, the load receiving portion 34 receiving the load from the seat 9.

In this case, the load receiving portion 34 of the load sensor 25 functions also as cushioning similar to the cushion rubber 27a on the side of the other seat rail 13R. Therefore, cushioning characteristics on the left and right of the seat 9 can be maintained to be substantially equal to each other, and vibration of the vehicle body which vibration is transmitted from the seat rails 13L, 13R to the seat 9 can be similarly absorbed on the left and right of the seat 9.

Preferably, the seat 9 includes a first seating surface 22a on which a driver is seated, a second seating surface 22b on which a rear occupant is seated, the second seating surface 22b being located above and in a rear of the first seating surface 22a, and an inclined surface 22c formed between the first seating surface 22a and the second seating surface 22b so as to be inclined forwardly downward, the load sensor 25 and the one cushion rubber 27a are arranged below the first seating surface 22a, and other cushion rubbers 27b, 27c than the one cushion rubber 27a are arranged below the inclined surface 22c.

In this case, when an occupant is seated on the seat 9, the load of the occupant is supported by the seat rails 13L, 13R via the cushion rubbers 27b, 27c below the inclined surface 22c of the seat 9 and the load sensor 25 and the cushion rubber 27a below the first seating surface 22a. At this time, the load of the occupant which load is input to the inclined surface 22c of the seat 9 acts on the seat 9 as a component force directed obliquely frontward and downward of the vehicle body. Thus, the load of the occupant easily concentrates on the load sensor 25 on the front side. Therefore the load sensor 25 can more surely detect the load.

In addition, a sensor bracket 26 straddling an upper surface of the seat rail 13L on one side in a left-right direction may be locked and fixed to the seat rail 13L, and the load sensor 25 may be attached to the seat rail 13L on one side via the sensor bracket 26.

In this case, the sensor bracket 26 supporting the load sensor 25 is attached to the seat rail 13L on one side so as to straddle the upper surface of the seat rail 13L in the left-right direction. Thus, even when the upper surface side of the seat rail 13L on one side is not in a flat shape or even when it is difficult to secure a sufficient supporting width for the load sensor 25 on the seat rail 13L, the load sensor 25 can be attached to the seat rail 13L on one side easily and stably.

The load sensor 25 is preferably attached to the seat rail 13L on a same side as a side stand 50 attached to a vehicle body.

In this case, even when the occupant stops the vehicle and inclines the vehicle body at the time of the stop, the load sensor 25 is disposed on the same side as the side to which the vehicle body is inclined. Thus, the load of the occupant is easily transmitted to the load sensor 25. Accuracy of riding detection is therefore increased.

### [Effects of the Invention]

According to the riding detecting device according to the present invention, the load sensor is attached to the seat rail on one side so as to be bilaterally symmetric to the cushion rubber on the side of the other seat rail. Thus, as compared with a case where the load sensor is disposed within the seat, the internal structure of the side of the seat can be simplified, and also the weight of the seat can be reduced.

In addition, the riding detecting device according to the present invention has the load sensor attached to the side of the seat rail. The riding detecting device according to the present invention therefore has an advantage in that the detachment and attachment and maintenance of the load sensor can be performed easily in a state of the seat being lifted upward.

Further, the riding detecting device according to the present invention has the load sensor attached to the seat rail on one side so as to be bilaterally symmetric to the cushion rubber disposed on the seat rail on the other side. The riding detecting device according to the present invention therefore has another advantage in that a space for disposing the load sensor is secured easily.

### [Brief Description of the Drawings]

[FIG. 1]

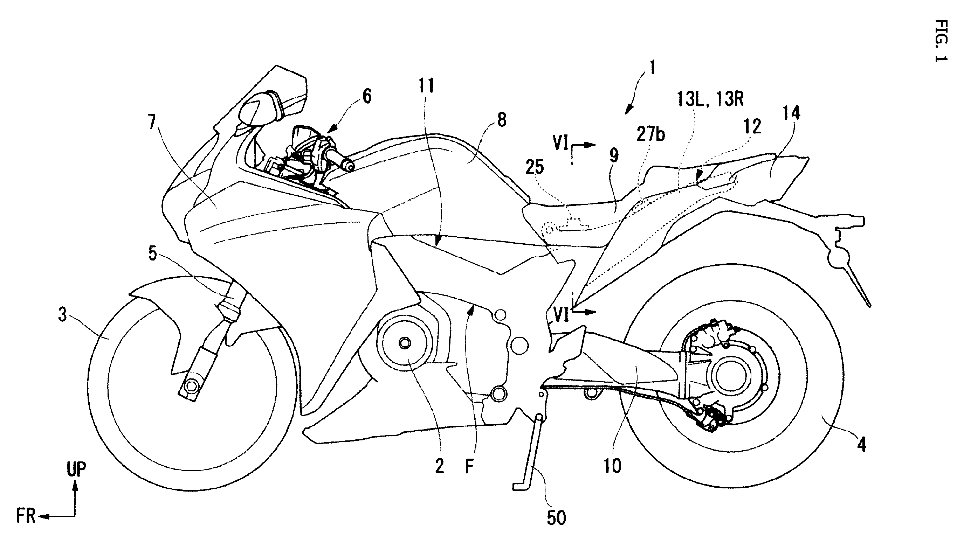

   FIG. 1 is a left side view of a saddle riding type vehicle according to one embodiment of the present invention.
[FIG. 2]

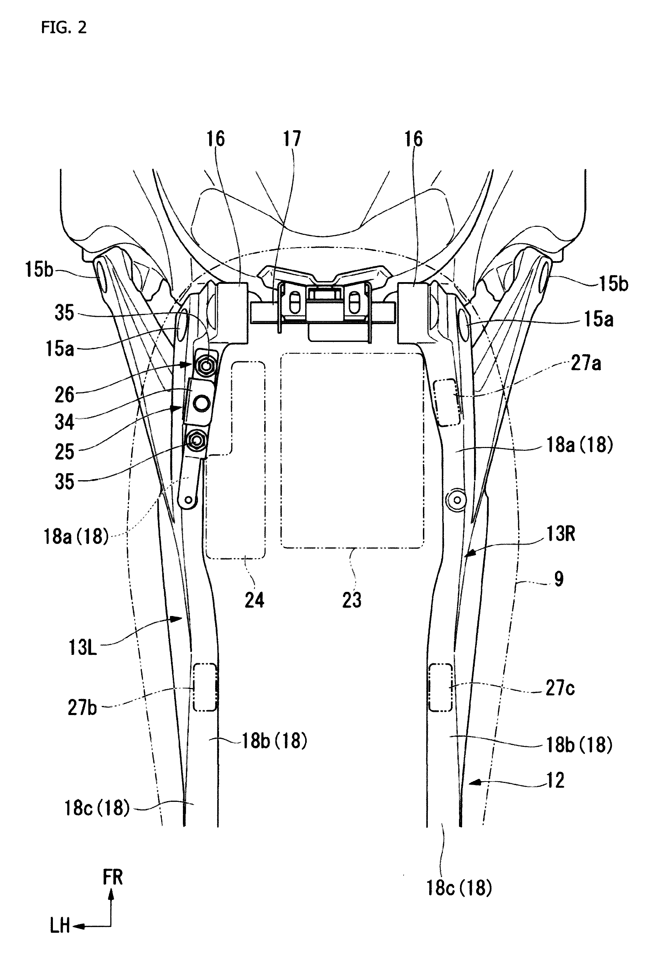

   FIG. 2 is a plan view of the saddle riding type vehicle according to one embodiment of the present invention in a state in which parts as part of the saddle riding type vehicle are removed.
[FIG. 3]

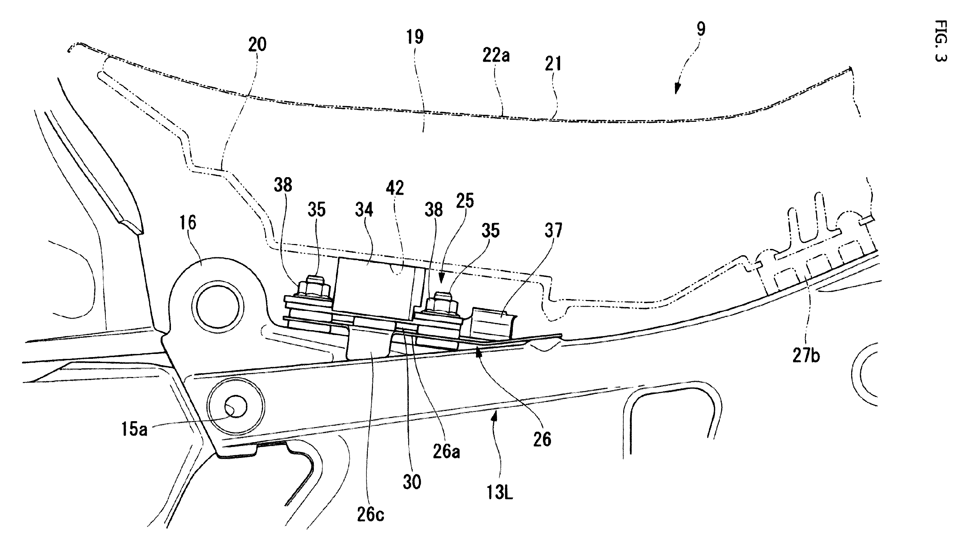

   FIG. 3 is a left side view of a seat supporting portion of the saddle riding type vehicle according to one embodiment of the present invention.
[FIG. 4]

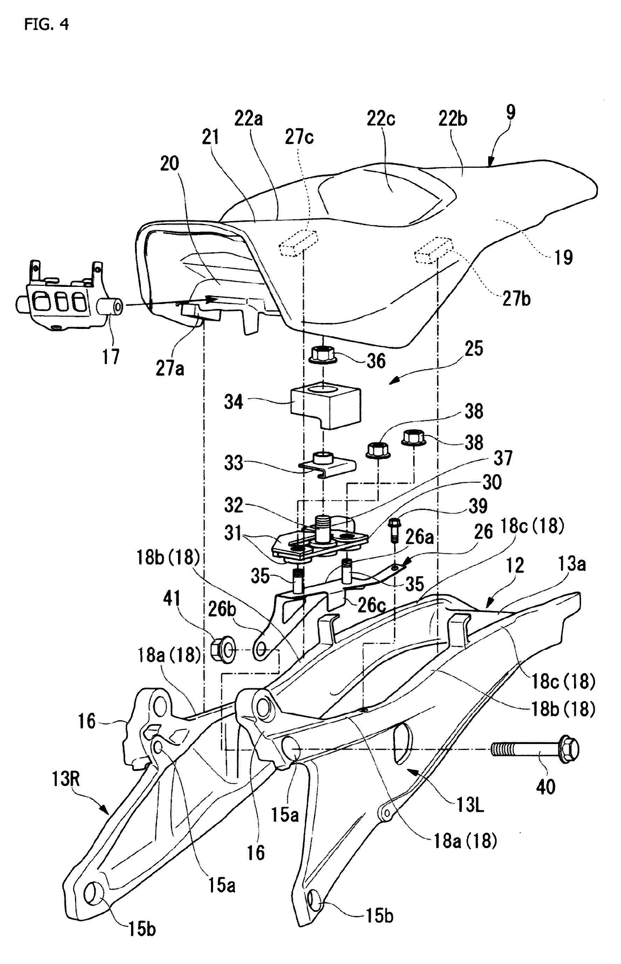

   FIG. 4 is an exploded perspective view of a seat and the seat supporting portion of the saddle riding type vehicle according to one embodiment of the present invention.
[FIG. 5]

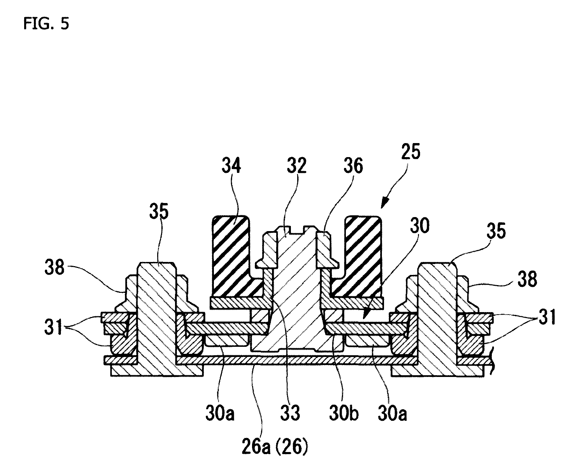

   FIG. 5 is a sectional view of a load sensor according to one embodiment of the present invention.
[FIG. 6]

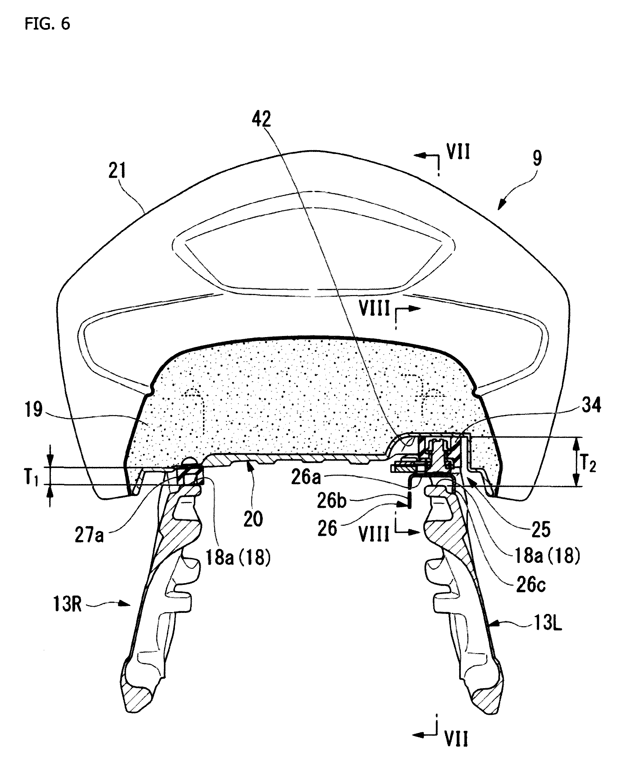

   FIG. 6 is a sectional view of the saddle riding type vehicle according to one embodiment of the present invention, the sectional view corresponding to a section taken along a line VI-VI of FIG. 1.
[FIG. 7]

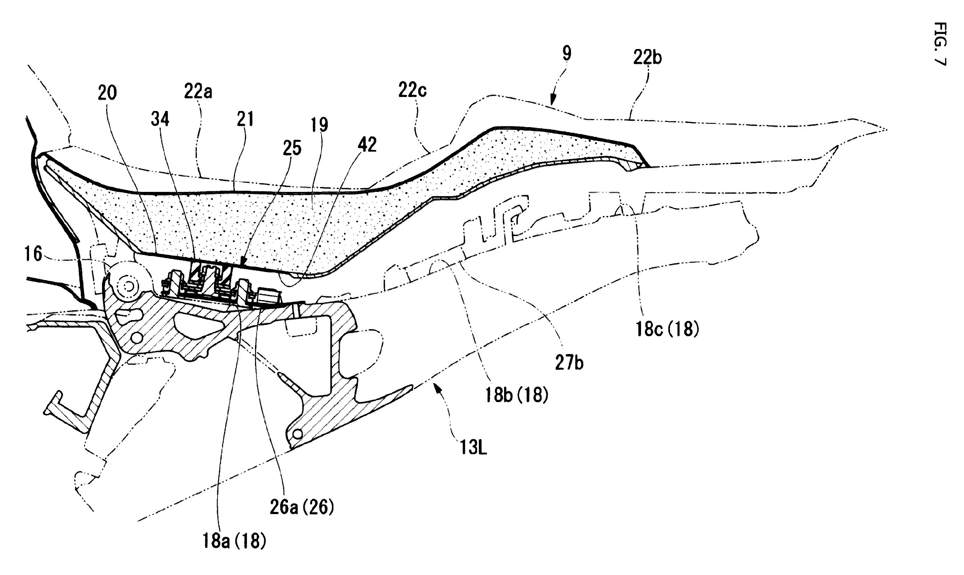

   FIG. 7 is a sectional view of the saddle riding type vehicle according to one embodiment of the present invention, the sectional view corresponding to a section taken along a line VII-VII of FIG. 6.
[FIG. 8]

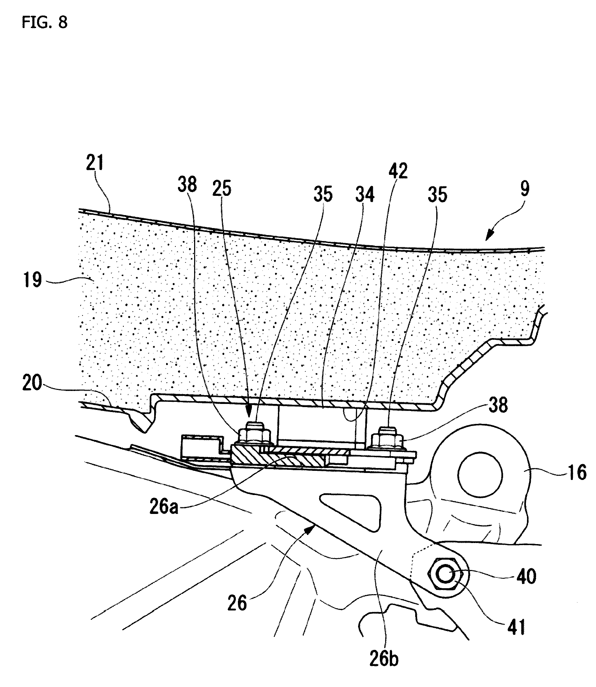

   FIG. 8 is a sectional view of the saddle riding type vehicle according to one embodiment of the present invention, the sectional view corresponding to a section taken along a line VIII-VIII of FIG. 6.

### [Mode for Carrying Out the Invention]

One embodiment of the present invention will hereinafter be described on the basis of the drawings. In the drawings to be used in the following description, an arrow FR indicates the forward direction of the vehicle, an arrow UP indicates the upward direction of the vehicle, and an arrow LH indicates the left direction of the vehicle.

FIG. 1 is a diagram showing the left side of a motorcycle 1 (saddle riding type vehicle) employing an occupant detecting device according to the present embodiment.

The motorcycle 1 has an engine 2 mounted in substantially a center in a forward-rearward direction of a vehicle body frame F, has a front wheel 3 disposed on the front side of the engine 2, and has a rear wheel 4 disposed on the rear side of the engine 2. The vehicle body frame F includes a head pipe not shown in the figures, the head pipe supporting a steering system of the vehicle, a main frame block 11 in substantially the shape of an L as viewed from a side, the main frame block 11 extending rearward from the head pipe and then bending downward, and a rear frame block 12 extending from an upper rear end of the main frame block 11 to a rear upper side of the vehicle body. The rear frame block 12 includes a pair of seat rails 13L and 13R arranged bilaterally symmetrically about a center line in a vehicle width direction of the vehicle. A front end portion of each of the seat rails 13L and 13R is coupled to the upper rear end of the main frame block 11.

A pair of left and right front fork members 5 that rotatably support the front wheel 3 is horizontally rotatably supported by the head pipe. A front wheel steering device 6 that allows the front wheel 3 to be steered is provided on the upper side of the head pipe.

A power unit including the engine 2 is coupled to the main frame block 11. In addition, a front end portion of a swing arm 10 that rotatably supports the rear wheel 4 is vertically swingably supported by a rear lower edge of the main frame block 11. The rear wheel 4 is driven for rotation by receiving power from the engine 2. Incidentally, a cushion unit, which is interposed between the swing arm 10 and the vehicle body frame F, is not shown in FIG. 1. In addition, a side stand 50 for keeping the vehicle standing in a state of being inclined to a left side during a stop is rotatably attached to a rear lower end on the left side of the main frame block 11.

The front of the front wheel steering device 6 is covered by a front cowl 7, which covers the front portion of the vehicle body from the front sides of side portions of the vehicle body. The front cowl 7 is integrally provided with a headlight, a side mirror, a display panel of various kinds of instruments, and the like. A fuel tank 8 is provided in the rear of the front wheel steering device 6.

A seat 9 for seating occupants is openably and closably attached to the rear of the fuel tank 8 and upper portions of the left and right seat rails 13L and 13R with the front end side of the seat 9 as a fulcrum of rotation. Side lower portions and a rear side of the seat 9 are covered by a rear cowl 14.

FIG. 2 is a plan view of the left and right seat rails 13L and 13R and parts around the left and right seat rails 13L and 13R in a state in which the seat 9 is removed. FIG. 3 is a left side view of a seat supporting portion including the seat rail 13L. FIG. 4 is an exploded perspective view of the seat 9 and the seat supporting portion.

The left and right seat rails 13L and 13R are formed in a tapered shape as viewed from a side such that the left and right seat rails 13L and 13R have a large width in an upward-downward direction on the front end side thereof and are gradually decreased in the width toward the rear side. The rear end sides of the left and right seat rails 13L and 13R are mutually coupled to each other by a cross beam portion 13a. Fastening holes 15a and 15b are provided to each of the front end portions of the seat rails 13L and 13R so as to be vertically separated from each other. These fastening holes 15a and 15b are fastened by bolts to the rear end portion of the main frame block 11.

In addition, seat supporting arms 16 are provided so as to protrude upward from inside regions in the vehicle width direction of upper edges of the front end portions of the seat rails 13L and 13R. A seat supporting member 17 on the front end side of the seat 9 is rotatably supported by both of the seat supporting arms 16. In addition, each of the upper surfaces of the left and right seat rails 13L and 13R forms a load supporting surface 18 that receives the load of the seat 9. The load supporting surface 18 includes: a front portion supporting surface 18a extending substantially horizontally from the front end portion to the rear side of the vehicle body; an intermediate supporting surface 18b tilting upward from the front portion supporting surface 18a to the rear side of the vehicle body; and a rear portion supporting surface 18c extending further from the intermediate supporting surface 18b to the rear side of the vehicle body. The rear portion supporting surface 18c is tilted upward to the rear side of the vehicle body in a similar manner to the intermediate supporting surface 18b. However, the rear portion supporting surface 18c is tilted to the upper side at a gentler angle than the intermediate supporting surface 18b.

The seat 9 includes: cushioning 19 of urethane or the like that receives the load of occupants; a bottom plate member 20 made of a hard resin which bottom plate member is disposed on the lower side of the cushioning 19 and supports the cushioning 19; and a seat outer skin 21 that covers the outside surface of the cushioning 19 and part of a peripheral portion on the undersurface side of the bottom plate member 20. The seat 9 in the present embodiment is formed so as to be elongated in the forward-rearward direction. An upper surface on the front side of the seat 9 is a first seating surface 22a for seating the driver. An upper surface on the rear side of the seat 9 is a second seating surface 22b for seating a rear occupant. The second seating surface 22b for seating the rear occupant is formed so as to include an upper surface higher than that of the first seating surface 22a. The first seating surface 22a and the second seating surface 22b are coupled to each other by an inclined surface 22c inclined downward from the rear to the front side. The undersurface of the bottom plate member 20 facing the load supporting surfaces 18 of the seat rails 13L and 13R is formed so as to be substantially parallel to each of the first seating surface 22a, the second seating surface 22b, and the inclined surface 22c of the seat 9.

Incidentally, reference symbols 23 and 24 in FIG. 2 denote a battery and a fuse box, respectively, disposed below and between the left and right seat rails 13L and 13R.

A load sensor 25 for detecting a load acting on the seat 9 is attached via a sensor bracket 26 to a frontside part of the front portion supporting surface 18a in the load supporting surface 18 of the seat rail 13L on one side. The load sensor 25 is connected to a controller not shown in the figures which controller controls the engine 2 and the like. The controller determines whether or not an occupant is seated on the seat 9 on the basis of a detection signal provided by the load sensor 25. The controller performs control to stop the engine 2 automatically (stop idling) when the controller determines that an occupant is seated on the seat 9 on the basis of the detection signal provided by the load sensor 25 while a condition that the engine 2 is being driven and vehicle speed is a predetermined vehicle speed or lower is satisfied, for example.

In addition, a plurality of cushion rubbers 27a, 27b, and 27c that abut against the load supporting surfaces 18 when the seat 9 is fixed by a seat catch not shown in the figures while the seat 9 is fitted in the seat supporting member 17 on the front end side are attached to regions of the undersurface of the bottom plate member 20 of the seat 9 which regions face the load supporting surfaces 18 of the seat rails 13L and 13R. In the case of the present embodiment, one cushion rubber 27b is attached to the region of the undersurface of the bottom plate member 20 which region faces the seat rail 13L on one side, and the two front and rear cushion rubbers 27a and 27c are attached to the regions of the undersurface of the bottom plate member 20 which regions face the seat rail 13R on the other side.

Specifically, one cushion rubber 27b is attached to the region of the undersurface of one side (left side) of the bottom plate member 20 which region faces the tilted intermediate supporting surface 18b in the load supporting surface 18 of the seat rail 13L on one side (which region is in a position below the inclined surface 22c). One cushion rubber 27a is attached to the region of the undersurface of the other side (right side) of the bottom plate member 20 which region faces a front edge portion of the front portion supporting surface 18a in the load supporting surface 18 of the seat rail 13R on the other side. One cushion rubber 27c is attached to the region of the undersurface of the other side (right side) of the bottom plate member 20 which region faces the tilted intermediate supporting surface 18b (which region is in a position below the inclined surface 22c). The cushion rubber 27a attached to the front of the other side (right side) of the bottom plate member 20 is disposed so as to be bilaterally symmetric to the load sensor 25 attached to one seat rail 13L. In addition, the cushion rubber 27b attached to the rear of one side (left side) of the bottom plate member 20 and the cushion rubber 27c attached to the rear of the other side (right side) of the bottom plate member 20 are arranged so as to be bilaterally symmetric to each other.

FIG. 5 is a diagram showing a longitudinal section of the load sensor 25 integrally assembled to the sensor bracket 26.

As shown in FIG. 4 and FIG. 5, the load sensor 25 in the present embodiment uses, as a detecting section, a strain gage 30 that detects deflection of a base plate 30b by converting the deflection of the base plate 30b into a change in resistance of a detecting element 30a. The base plate 30b of the strain gage 30 is retained such that both end portions in a longitudinal direction of the base plate 30b are held between a pair of supporting plates 31. A load input shaft 32 is attached to a central portion of the base plate 30b. A spacer 34 formed by an elastic member of a rubber material or the like is attached to the load input shaft 32 via a retainer plate 33. In addition, the supporting plates 31 supporting both ends of the base plate 30b are fastened and fixed to a pair of bolt shafts 35 projected from the upper surface of the sensor bracket 26. The upper surface of the spacer 34 abuts against the undersurface of the bottom plate member 20 of the seat 9. Incidentally, in the present embodiment, the spacer 34 forms a load receiving portion of the load sensor 25 which load receiving portion receives a load from the seat 9.

Incidentally, a reference symbol 36 in FIG. 4 and FIG. 5 denotes a nut for fastening and fixing the spacer 34 to the load input shaft 32. A reference symbol 37 denotes a detecting base attached to the supporting plates 31. Reference symbols 38 denote nuts for fastening and fixing the strain gage 30 to the bolt shafts 35 of the sensor bracket 26 together with the supporting plates 31.

FIG. 6 is a sectional view of the seat 9 and the seat supporting portion (rear frame block 12), the sectional view corresponding to a section taken along a line VI-VI of FIG. 1. FIG. 7 is a sectional view of the seat 9 and the seat supporting portion (rear frame block 12), the sectional view corresponding to a section taken along a line VII-VII of FIG. 6. FIG. 8 is a sectional view of the seat 9 and the seat supporting portion (rear frame block 12), the sectional view corresponding to a section taken along a line VIII-VIII of FIG. 6.

As shown in FIGS. 4 to 8, the sensor bracket 26 includes: a supporting base portion 26a formed by a metal plate, and disposed substantially along the upper surface of the front portion supporting surface 18a (load supporting surface 18) of the seat rail 13L on one side; an inside supporting wall 26b bending downward from an end portion on the right side of the supporting base portion 26a and extending obliquely forward; and an outside supporting wall 26c bending and extending downward from an end portion on the left side of the supporting base portion 26a. The inside supporting wall 26b and the outside supporting wall 26c of the sensor bracket 26 are made to abut against the respective side surfaces of the inside and the outside in the vehicle width direction of the seat rail 13L in a state of the load sensor 25 being attached to the upper surface side of the sensor bracket 26. The sensor bracket 26 in that state is fastened and fixed to the seat rail 13L. Specifically, as shown in FIG. 4, at this time, a rear edge portion of the supporting base portion 26a is fastened onto the front portion supporting surface 18a of the seat rail 13L by a screw 39, and a front edge portion of the inside supporting wall 26b is fastened and fixed into the fastening hole 15a in the front end portion of the seat rail 13L by a bolt 40 and a nut 41. Hence, the sensor bracket 26 thus attached to the seat rail 13L is stably locked to the seat rail 13L in a state of straddling the upper surface (front portion supporting surface 18a) of the seat rail 13L in a left-right direction.

The load sensor 25 employed in the present embodiment has a structure in which, as described above, the strain gage 30 is attached onto the bolt shafts 35 of the sensor bracket 26 in a state of the strain gage 30 being vertically sandwiched between the supporting plates 31, and the spacer 34 is attached to the load input shaft 32 projecting upward from the central portion of the strain gage 30. Thus, as shown in FIG. 6, a thickness T₂ in the upward-downward direction of the load sensor 25 as a whole is larger than a material thickness T₁ in the upward-downward direction of the cushion rubber 27a installed on the side of the seat 9. A recessed portion 42 recessed upward is therefore provided in a position of the bottom plate member 20 on the side of the seat 9 which position is opposed to the load sensor 25. The recessed portion 42 abuts against the upper surface of the spacer 34, which is the load receiving portion of the load sensor 25, when the seat 9 is closed about the hinge shaft (seat supporting member) 17. The recessed portion 42 can thereby transmit a load acting on the seat 9 to the strain gage 30 of the load sensor 25 via the spacer 34.

Incidentally, in the case of the present embodiment, a material thickness in the upward-downward direction of the spacer 34 of the load sensor 25 is substantially equal to the material thickness T₁ in the upward-downward direction of the cushion rubber 27a.

The occupant detecting device employed in the motorcycle 1 according to the present embodiment has the load sensor 25 attached to the position on the seat rail 13L on one side (left side) which position is bilaterally symmetric to the cushion rubber 27a on the front side of the other side (right side) of the seat 9. Therefore, when an occupant is seated on the seat 9, the load of the occupant is distributed and supported by the load sensor 25 and the cushion rubber 27a, and the load is detected by the load sensor 25. The load of the occupant which load acts on the seat 9 is thus reliably detected by the load sensor 25. In the occupant detecting device according to the present embodiment, the load sensor 25 is attached to the seat rail 13L on one side. Thus, as compared with a case where the load sensor 25 is embedded within the seat 9, the internal structure of the side of the seat 9 can be simplified, and the weight of the seat 9 can be reduced by an amount corresponding to the load sensor 25 and wiring therefor, which are not on the side of the seat 9.

In addition, because the occupant detecting device according to the present embodiment has the load sensor 25 attached to the side of the seat rail 13L rather than the side of the seat 9, the detachment and attachment and maintenance of the load sensor 25 can be performed easily in a state of the seat 9 being lifted upward about the hinge shaft 17 on the front end side. There is another advantage in that the wiring for the load sensor 25 is retained stably because the load sensor 25 is disposed on the side of the seat rail 13L which is not so greatly swung as the seat 9.

In particular, the occupant detecting device according to the present embodiment has the load sensor 25 attached to the seat rail 13L on the same side as the side on which the side stand 50 is installed. Thus, even when the driver (occupant) stops the vehicle and inclines the vehicle body at the time of the stop, the load sensor 25 is disposed on the same side as the side to which the vehicle body is inclined. Therefore, the load of the occupant is easily transmitted to the load sensor 25 during the stop of the vehicle, so that accuracy of riding detection is correspondingly increased.

Further, the occupant detecting device according to the present embodiment has the load sensor 25 disposed in a space between the seat rail 13L and the seat 9 in which space a cushion rubber should be disposed. There is thus an advantage in that a space for installing the load sensor 25 is easily secured.

In addition, in the occupant detecting device according to the present embodiment, even when the thickness T₂ in the upward-downward direction of the load sensor 25 as a whole is set larger than the thickness T₁ in the upward-downward direction of the cushion rubber 27a disposed on the right front portion of the seat 9, because the recessed portion 42 is provided to a region of the bottom plate member 20 of the seat 9 which region faces the load sensor 25, the part of the load sensor 25 which part projects further upward than the cushion rubber 27a can be received by the recessed portion 42, and the load of an occupant which load acts on the seat 9 can be surely transmitted to the load sensor 25 via the recessed portion 42. Hence, when the occupant detecting device according to the present embodiment is employed, thickness in the upward-downward direction of the seat 9 as a whole does not need to be increased unnecessarily.

In addition, in the occupant detecting device according to the present embodiment, the spacer 34 as the load receiving portion of the load sensor 25 is formed by an elastic member of a rubber material or the like. Thus, the spacer 34 of the load sensor 25 functions also as cushioning similar to the cushion rubber 27a under the right front portion of the seat 9. Hence, when the occupant detecting device is employed, cushioning characteristics on the left and the right under the front side of the seat 9 can be maintained to be substantially equal to each other, thus providing an excellent sitting feeling, and vibration of the vehicle body which vibration is transmitted from the seat rails 13L and 13R to the seat 9 can be similarly absorbed on the left and the right under the front side of the seat 9.

Further, in the occupant detecting device according to the present embodiment, the load sensor 25 and one cushion rubber 27a are arranged below the first seating surface 22a for seating the driver on the seat 9, and the two remaining cushion rubbers 27b and 27c are arranged below the inclined surface 22c between the first seating surface 22a and the second seating surface 22b for seating the rear occupant. Thus, when the occupant is seated on the seat 9, the load of the occupant which load is input to the inclined surface 22c of the seat 9 acts on the seat 9 as a component force directed obliquely frontward and downward of the vehicle body. Hence, when the occupant detecting device according to the present embodiment is employed, the load of the occupant easily concentrates on the load sensor 25 disposed under the front side of the seat 9, so that the load sensor 25 can surely detect the load of the occupant.

In addition, in the occupant detecting device according to the present embodiment, the sensor bracket 26 that straddles the upper surface of the seat rail 13L in the left-right direction is locked to the seat rail 13L on one side, and the load sensor 25 is attached to the seat rail 13L on one side via the sensor bracket 26. Thus, even when the upper surface side of the seat rail 13L on one side is not in a flat shape or even when it is difficult to secure a sufficient supporting width for the load sensor 25, the load sensor 25 can be attached to the seat rail 13L on one side easily and stably.

In particular, in the case of the present embodiment, the sensor bracket 26 is provided with the inside supporting wall 26b and the outside supporting wall 26c that abut against the left and right side walls of the seat rail 13L. Thus, the load sensor 25 can be more stably locked and fixed onto the seat rail 13L together with the sensor bracket 26.

It is to be noted that the present invention is not limited to the foregoing embodiment, but various design changes can be made without departing from the scope of the present invention defined by the claims. For example, in the foregoing embodiment, the load sensor 25 is installed on the seat rail 13L on the left side. However, the load sensor 25 may be installed on the seat rail 13R on the right side. Further, the detecting system of the load sensor 25 is not limited to one using a strain gage, but may be another detecting system. In addition, the number of cushion rubbers installed under the seat 9 is not limited to that of the foregoing embodiment, but is arbitrary.

In addition, the saddle riding type vehicle in the present specification includes vehicles in general that drivers ride astride the vehicle bodies. The saddle riding type vehicle in the present specification includes not only motorcycles (including motor-assisted bicycles and motor scooter type vehicles) but also three-wheeled vehicles (including vehicles having two front wheels and one rear wheel as well as vehicles having one front wheel and two rear wheels) or four-wheeled vehicles.

### [Description of Reference Symbols]

- 9: Seat
- 13L, 13R: Seat rail
- 19: Cushioning
- 20: Bottom plate member
- 22a: First seating surface
- 22b: Second seating surface
- 22c: Inclined surface
- 25: Load sensor
- 26: Sensor bracket
- 27a, 27b, 27c: Cushion rubber
- 34: Spacer (load receiving portion)
- 42: Recessed portion
- 50: Side stand

## Claims

1. A riding detecting device for a saddle riding type vehicle, the riding detecting device comprising:
a seat (9) on which an occupant is seated;
a pair of left and right seat rails (13L, 13R) disposed below the seat (9) to support a load of the seat (9); and
a load sensor (25) detecting the load acting on the seat (9),
wherein the seat (9) includes cushioning (19) receiving the load of the occupant and a bottom plate member (20) supporting the cushioning (19),
**characterized in that**
at least one cushion rubber (27a, 27b, 27c) is disposed between the bottom plate member (20) and the seat rails (13L, 13R),
the load sensor (25) is attached to the seat rail (13L) on one side, and
one (27a) of the cushion rubbers is disposed so as to be capable of abutting against a position of the seat rail (13R) on another side, the position of the seat rail (13R) being bilaterally symmetric to the load sensor (25).

2. The riding detecting device for a saddle riding type vehicle according to claim 1,
wherein a thickness (T₂) in an upward-downward direction of the load sensor (25) is set larger than a thickness (T₁) in the upward-downward direction of the cushion rubber (27a), and
a recessed portion (42) that is recessed upward, abuts against the load sensor (25), and transmits the load to the load sensor (25), is provided at a position of the bottom plate member (20), the position of the bottom plate member (20) being opposed to the load sensor (25).

3. The riding detecting device for a saddle riding type vehicle according to claim 1 or 2,
wherein the load sensor (25) is provided with a load receiving portion (34) formed by an elastic member, the load receiving portion (34) receiving the load from the seat (9).

4. The riding detecting device for a saddle riding type vehicle according to any one of claims 1 to 3,
wherein the seat (9) includes a first seating surface (22a) on which a driver is seated, a second seating surface (22b) on which a rear occupant is seated, the second seating surface (22b) being located above and in a rear of the first seating surface (22a), and an inclined surface (22c) formed between the first seating surface (22a) and the second seating surface (22b) so as to be inclined forwardly downward,
the load sensor (25) and the one cushion rubber (27a) are arranged below the first seating surface (22a), and
other cushion rubbers (27b, 27c) than the one cushion rubber (27a) are arranged below the inclined surface (22c).

5. The riding detecting device for a saddle riding type vehicle according to any one of claims 1 to 4,
wherein a sensor bracket (26) straddling an upper surface of the seat rail (13L) on one side in a left-right direction is locked and fixed to the seat rail (13L), and
the load sensor (25) is attached to the seat rail (13L) on one side via the sensor bracket (26).

6. The riding detecting device for a saddle riding type vehicle according to any one of claims 1 to 5,
wherein the load sensor (25) is attached to the seat rail (13L) on a same side as a side stand (50) attached to a vehicle body.

## Patentansprüche

1. Fahrerfassungsvorrichtung für ein Fahrzeug vom Sattelfahrtyp, wobei die Fahrerfassungsvorrichtung umfasst:
einen Sitz (9), auf welchem ein Fahrer sitzt;
ein Paar von linken und rechten Sitzstreben (13L, 13R), welche unter dem Sitz (9) angeordnet sind, um eine Last des Sitzes (9) zu stützen;
und
einen Lastsensor (25), welcher die auf den Sitz (9) wirkende Last erfasst,
wobei der Sitz (9) eine Dämpfung (19), welche die Last des Fahrers aufnimmt, und ein Bodenplattenelement (20) umfasst, welches die Dämpfung (19) haltert,
**dadurch gekennzeichnet, dass**
wenigstens ein Dämpfungsgummi (27a, 27b, 27c) zwischen dem Bodenplattenelement (20) und den Sitzstreben (13L, 13R) angeordnet ist,
der Lastsensor (25) an die Sitzstrebe (13L) auf einer Seite angebracht ist, und
einer (27a) der Dämpfungsgummis derart angeordnet ist, um in der Lage zu sein, gegen eine Position der Sitzstrebe (13R) auf einer anderen Seite anzuliegen, wobei die Position der Sitzstrebe (13R) bilateral symmetrisch zu dem Lastsensor (25) ist.

2. Fahrerfassungsvorrichtung für ein Fahrzeug vom Sattelfahrtyp nach Anspruch 1,
wobei eine Dicke (T₂) in einer Oben-Unten-Richtung des Lastsensors (25) größer festgelegt ist als eine Dicke (T₁) in der Oben-Unten-Richtung des Dämpfungsgummis (27a), und
ein ausgenommener Abschnitt (42), welcher nach oben ausgenommen ist, gegen den Lastsensor (25) anliegt und die Last an den Lastsensor (25) überträgt,
an einer Position des Bodenplattenelements (20) vorgesehen ist, wobei die Position des Bodenplattenelements (20) dem Lastsensor (25) gegenüberliegend ist.

3. Fahrerfassungsvorrichtung für ein Fahrzeug vom Sattelfahrtyp nach Anspruch 1 oder 2,
wobei der Lastsensor (25) mit einem Lastaufnahmeabschnitt (34) versehen ist, welcher durch ein elastisches Element gebildet ist, wobei der Lastaufnahmeabschnitt (34) die Last von dem Sitz (9) aufnimmt.

4. Fahrerfassungsvorrichtung für ein Fahrzeug vom Sattelfahrtyp nach einem der Ansprüche 1 bis 3,
wobei der Sitz (9) eine erste Sitzfläche (22a), auf welcher ein Fahrer sitzt, eine zweite Sitzfläche (22b), auf welcher ein Beifahrer sitzt, wobei die zweite Sitzfläche (22b) oberhalb und hinter der ersten Sitzfläche (22a) angeordnet ist, und eine geneigte Fläche (22c) umfasst, welche zwischen der ersten Sitzfläche (22a) und der zweiten Sitzfläche (22b) gebildet ist, um vorwärts nach unten geneigt zu sein,
wobei der Lastsensor (25) und der eine Dämpfungsgummi (27a) unterhalb der ersten Sitzfläche (22a) angeordnet sind, und
andere Dämpfungsgummis (27b, 27c) als der eine Dämpfungsgummi (27a) unterhalb der geneigten Fläche (22c) angeordnet sind.

5. Fahrerfassungsvorrichtung für ein Fahrzeug vom Sattelfahrtyp nach einem der Ansprüche 1 bis 4,
wobei ein Sensorhalter (26), welcher eine obere Fläche der Sitzstrebe (13L) an einer Seite in einer Links-Rechts-Richtung überspannt, mit der Sitzstrebe (13L) verriegelt ist und an diese befestigt ist, und
der Lastsensor (25) an der Sitzstrebe (13L) an einer Seite über dem Sensorhalter (26) angebracht ist.

6. Fahrerfassungsvorrichtung für ein Fahrzeug vom Sattelfahrtyp nach einem der Ansprüche 1 bis 5,
wobei der Lastsensor (25) an der Sitzstrebe (13L) auf der gleichen Seite wie ein Seitenständer (50) angebracht ist, welcher an einem Fahrzeugkörper angebracht ist.

## Revendications

1. Dispositif de détection de chevauchement pour un véhicule de type à selle, le dispositif de détection de chevauchement comprenant :
un siège (9) sur lequel un occupant est assis ;
une paire de rails de siège gauche et droit (13L, 13R) disposés au-dessous du siège (9) pour supporter une charge du siège (9) ; et
un capteur de charge (25) détectant la charge agissant sur le siège (9),
dans lequel le siège (9) comprend un rembourrage (19) recevant la charge de l'occupant et un élément de plaque inférieure (20) supportant le rembourrage (19),
**caractérisé en ce que** :
au moins un caoutchouc d'amortissement (27a, 27b, 27c) est disposé entre l'élément de plaque inférieure (20) et les rails de siège (13L, 13R),
le capteur de charge (25) est fixé sur le rail de siège (13L) d'un côté, et
l'un (27a) des caoutchoucs d'amortissement est disposé afin de pouvoir venir en butée contre une position du rail de siège (13R) de l'autre côté, la position du rail de siège (13R) étant bilatéralement symétrique au capteur de charge (25).

2. Dispositif de détection de chevauchement pour un véhicule de type à selle selon la revendication 1,
dans lequel une épaisseur (T₂) dans une direction ascendante-descendante du capteur de charge (25) est supérieure à une épaisseur (T₁) dans la direction ascendante-descendante du caoutchouc d'amortissement (27a), et
une partie évidée (42) qui est évidée vers le haut, vient en butée contre le capteur de charge (25) et transmet la charge au capteur de charge (25), est prévue dans une position de l'élément de plaque inférieure (20), la position de l'élément de plaque inférieure (20) étant opposée au capteur de charge (25).

3. Dispositif de détection de chevauchement pour un véhicule de type à selle selon la revendication 1 ou 2,
dans lequel le capteur de charge (25) est prévu avec une partie de réception de charge (34) formée par un élément élastique, la partie de réception de charge (34) recevant la charge du siège (9).

4. Dispositif de détection de chevauchement pour un véhicule de type à selle selon l'une quelconque des revendications 1 à 3,
dans lequel le siège (9) comprend une première surface d'assise (22a) sur laquelle un conducteur est assis, une seconde surface d'assise (22b) sur laquelle un occupant arrière est assis, la seconde surface d'assise (22b) étant positionnée au-dessus et dans une partie arrière de la première surface d'assise (22a) et une surface inclinée (22c) formée entre la première surface d'assise (22a) et la seconde surface d'assise (22b) afin d'être inclinée vers l'avant vers le bas,
le capteur de charge (25) et le un caoutchouc d'amortissement (27a) sont agencés au-dessous de la première surface d'assise (22a), et
d'autres caoutchoucs d'amortissement (27b, 27c) différents du un caoutchouc d'amortissement (27a) sont agencés au-dessous de la surface inclinée (22c).

5. Dispositif de détection de chevauchement pour un véhicule de type à selle selon l'une quelconque des revendications 1 à 4,
dans lequel un support de capteur (26) enjambant une surface supérieure du rail de siège (13L) d'un côté dans une direction gauche-droite, est bloqué et fixé sur le rail de siège (13L), et
le capteur de charge (25) est fixé sur le rail de siège (13L) d'un côté via le support de capteur (26).

6. Dispositif de détection de chevauchement pour un véhicule de type à selle selon l'une quelconque des revendications 1 à 5,
dans lequel le capteur de charge (25) est fixé sur le rail de siège (13L) sur un même côté qu'un support latéral (50) fixé sur un corps de véhicule.
